# EUROPEAN PATENT APPLICATION

(11) **EP 4 137 887 A1**
(43) Date of publication of application: **22.02.2023**
(21) Application number: 22191204.1
(22) Date of filing: 19.08.2022
(51) Int. Cl.: G03B 9/08, G03B 11/04, G03B 15/05, G03B 43/00, G01D 3/08, H04N 17/00, F41G 7/20

(54) **SHUTTER SEEKER CALIBRATION**

(30) Priority: 19.08.2021 US 202117406510
(71) Applicant: Simmonds Precision Products, Inc., Vergennes, VT 05491 (US)
(72) Inventor: EVANS, Owen, Burnsville, 55337 (US); GRAHAM, Jason, Prior Lake, 55372 (US); RUTKIEWICZ, Robert, Burnsville, 55410 (US)
(74) Representative: Dehns

(57) **Abstract**

In certain embodiments, an imaging system includes an enclosure with an objective aperture opening into an interior space of the enclosure, an optical assembly optically coupling the objective aperture to an imaging sensor within the enclosure, a shutter mounted to the objective aperture for selectively blocking and admitting illumination through the objective aperture into the interior space, and an illuminator mounted to illuminate the interior space of the enclosure.

## Description

### BACKGROUND

### 1. Field

The present disclosure relates generally to imaging systems, and more particularly to imaging systems such as used in seeker systems for targeting and the like.

### 2. Description of Related Art

Seekers such as in guided munitions and other targeting systems utilize an imaging sensor and optics for forming images used in targeting. Imaging sensors need calibration and are traditionally calibrated prior to deployment in the field. In the field, there are various events that can present an undesired external stimulus to the sensor. Re-calibration would traditionally require being brought back into a lab environment. While the traditional techniques have been considered sufficient for their intended purposes, there is an ongoing need for improved systems and methods.

### SUMMARY

In certain embodiments, an imaging system includes an enclosure with an objective aperture opening into an interior space of the enclosure, an optical assembly optically coupling the objective aperture to an imaging sensor within the enclosure, a shutter mounted to the objective aperture for selectively blocking and admitting illumination through the objective aperture into the interior space, and an illuminator mounted to illuminate the interior space of the enclosure.

A window is disposed in the objective aperture bounding the interior space together within the enclosure. The shutter can be assembled in an optical path between the window and the image sensor. An imaging board is operatively connected to the imaging sensor. In embodiments, the imaging sensor is sensitive to SWIR wavelengths. In certain embodiments, a shutter controller is operatively connected to the imaging board to control the shutter, and an illuminator controller is operatively connected to the imaging board to control the illuminator.

The imaging board includes machine readable instructions configured to cause the imaging board perform at least one of: blocking, with the shutter, illumination outside the enclosure from reaching the interior space, illuminating, with the illuminator, the interior space, and capturing, with the imaging sensor, a calibration image using illumination from the illuminator. The shutter can be a curtain shutter, a leaf shutter, and/or any other suitable type of shutter.

The machine readable instructions are configured to further cause the imaging board to use the calibration image to calibrate the imaging sensor for capturing images with non-uniformity correction. In certain embodiments, the machine readable instructions are configured to further cause the imaging board to compensate for an illumination gradient on the imaging sensor from non-uniform illumination from the illuminator on the imaging sensor. In certain embodiments, the machine readable instructions are configured to further cause the imaging board to run calibration at multiple illumination levels of the illuminator and form a respective calibration image at each illumination level for non-uniformity calibration. In certain embodiments, the machine readable instructions are configured to further cause the imaging board to form non-uniformity corrected images after calibration is complete.

A method comprises blocking, with a shutter mounted to an objective aperture, illumination outside an enclosure of the objective aperture from reaching an interior space of the enclosure, illuminating, with an illuminator, the interior space, and, capturing, with an imaging sensor optically coupled to the objective aperture, a calibration image using illumination from the illuminator.

In embodiments, the method further includes, using the calibration image to calibrate the imaging sensor for capturing images with non-uniformity correction. In certain embodiments, the method further includes, compensating for an illumination gradient on the imaging sensor from non-uniform illumination from the illuminator on the imaging sensor. In certain embodiments, the method further includes running calibration at multiple illumination levels of the illuminator and forming a respective calibration image at each illumination level for non-uniformity calibration. In certain embodiments, the method further includes, forming non-uniformity corrected images after calibration is complete. In certain embodiments, the method is performed outside of a calibration lab, after an undesired external stimulus to the imaging sensor compromises an initial calibration that was performed prior to the undesired external stimulus to the imaging sensor.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic plan view of an embodiment of an imaging system constructed in accordance with the present disclosure, showing an arrangement of optical components within the imaging system;
Fig. 2 is a schematic end view of an embodiment of a shutter of the arrangement of Fig. 1;
Fig. 3 is a schematic end view of another embodiment of a shutter of the arrangement of Fig. 1; and
Fig. 4 is a schematic box diagram showing the system of Fig. 1 interacting with an environment.

### DETAILED DESCRIPTION

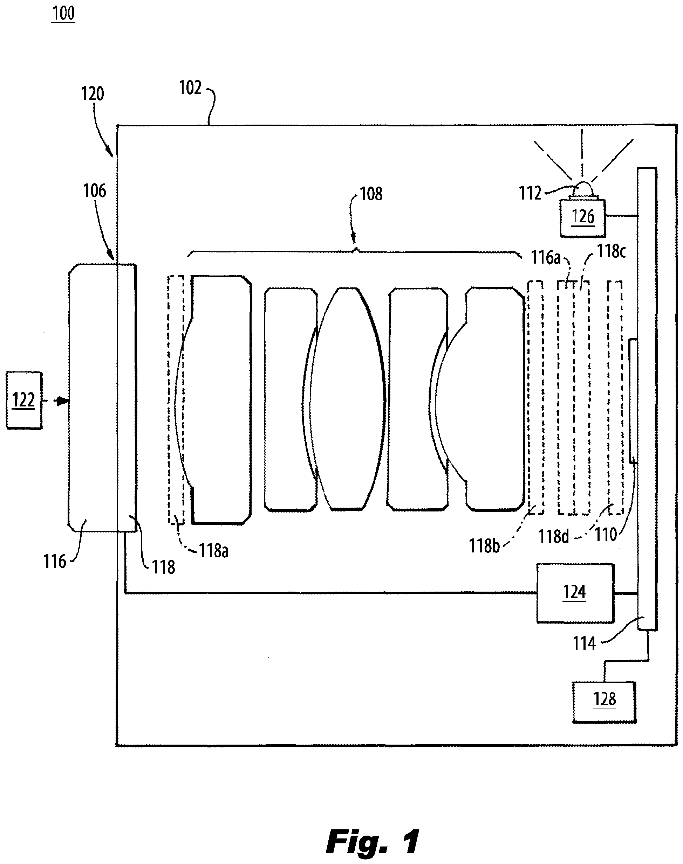

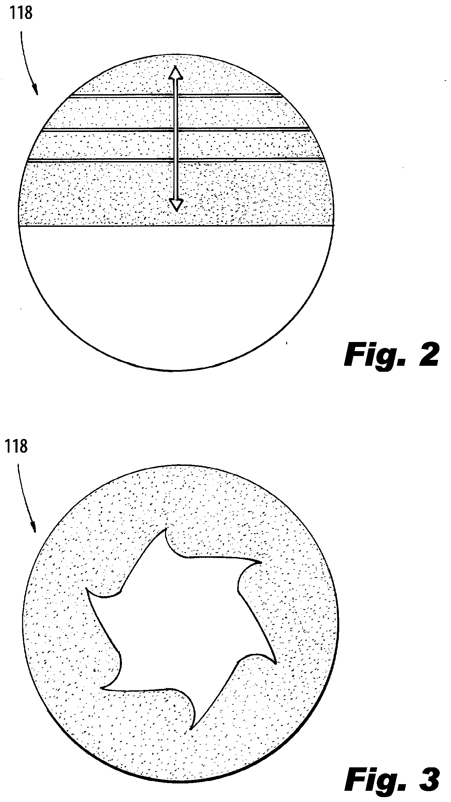

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-3, as will be described. The systems and methods described herein can be used for real-time embedded non-uniformity correction (NUC) calibration and enhancing scene capture capabilities.

In conventional SWIR sensor the sensing material and pixel electronics will vary over temperature. This dependency on temperature is minimized by using temperature stabilizing cooling elements, thermoelectric coolers, or incorporating a temperature sensor and determining NUC values over the operating temperature range. The NUC performance is checked at the factory after calibration where the illumination and temperature environment are adjusted. Without returning to a calibration lab, SWIR sensors do not have a method of validating existing NUC values or recalibrating themselves if there is a change in performance created by external stimuli, such as high vibrations and mechanical shocks.

For high dynamic range scenes, there are limitations of minimum threshold and saturation within a single frame capture. The minimum threshold limit is avoided by using a higher gain value. The saturation limit requires a lowering of the global gain. For very high light intensity, an additional effect occurs where the number of electrons is greater than the individual pixel can accept. These excess electrons migrate to neighboring pixels making the light source appear bigger. The global gain has no effect in this condition. The use of a leaf shutter reducing the global aperture, over the full scene, limits the rate of photons entering the sensor to below the threshold, removing the migrating electron effect. The shutter enables enhanced image capture and improves means to perform NUC calibration.

NUC calibration uses data captured at multiple levels of settings to obtain pixels values that vary from no light up through saturation. This can be performed using the controls in a ROIC (readout integrated circuit, e.g. interfaced with an imaging sensor) that sets the electron expose time and a variable gain. A shutter provides a redundant capacity for calibration for ROICs with such controls. The shutter control enables NUC calibration for ROIC designs without global expose time or variable gains of the sensor. A ROIC with a fixed gain setting or a limited number of gain settings uses the shutter to supply images with needed number of varying of pixel values.

In order to provide high quality uniform pixel performance in the images with a SWIR InGaAs sensor, a large amount of upfront calibration before use is required to characterize the functionality of the sensor. This calibration is also utilized to create Non Uniformity Correction (NUC) tables to correct differences in pixel values at a constant light level. The manufacturing SWIR NUC calibration process typically uses an integrated sphere with a variable light source and creates a uniform illumination. The illumination source is then applied to the SWIR sensor within a temperature chamber. This is a long duration calibration process as the testing is performed at multiple temperatures, multiple light levels, and over a range of global gain settings. A large number of images are captured and then processed to generate a set of correction values based on the collected calibration data.

Such a long calibration process proves disadvantageous when calibration needs to be performed quickly, and without access to a calibration lab. Inclusion of a shutter in the imaging system 100 as described herein removes the need to calibrate NUC values across temperatures ranges prior to encountering a new temperature environment because the shutter is used in-situ. The shutter can therefore be used to collect real time calibration data as needed.

As shown in Fig. 1, the imaging system 100 includes an enclosure 102 forming an interior space 104 for housing the hardware required for the system 100, as can be impervious to light leakage. An objective aperture 106 opens into the interior space, and an optical assembly 108 optically couples the objective aperture 106 to an imaging sensor 110 within the enclosure 102. The optical assembly can include any suitable optical components, for example a series of lenses placed in front of the sensor 110 to focus light into the sensor 110. An illuminator 112 (e.g. a SWIR LED light source) is mounted to illuminate the interior space 104 of the enclosure 102, for example to enable internal system lighting of the sensor 110. An imaging board 114 is included within the enclosure 102 and can include the imaging sensor 110 (e.g. a singular sensor or an array, sensitive to SWIR wavelengths), for example to capture images and/or video.

In embodiments, the SWIR sensor 110 has the capability to vary the gain of the sensing array, the global gain control being common to all pixels. This enables a smoothly varying, non-uniform illumination to be used instead of a globally uniform illumination. For example, pixel count value deviation from a nominal value can be captured assuming the smooth, low variation across the sensing array is uniform across small regions.

An optical window 116 is disposed in the objective aperture 106 bounding the interior space 104 together within the enclosure 102, where a shutter 118 is assembled to the window 116. For example, the window 116 can be placed on an exterior barrier 120 of the enclosure to allow light to enter in a controlled location.

The shutter 118 is mounted to the objective aperture 106 for selectively blocking and admitting illumination through the objective aperture 106 into the interior space 104. For example, the shutter 118 can decrease the light transmission time or optical aperture allowing an increase in the maximum light intensity without the need for a change in electronic expose time. In addition, the shutter 118 can be used to modulate or shutter incoming light such that the imaging sensor 110 could be synchronized to external light sources 122 in either enhancing light sources or filtering out illumination noise. This optical light intensity control is separate from the ROIC electronic control of capturing photo electrons. This shutter is a time switch and flow control on the photons passing through the optics rather than a gain control and timer switch on the electrons generated by the sensor 110.

In certain embodiments the shutter 118 can be placed on the backside of the window 116 to control the amount of light transmitted through the window 116 (e.g. as shown in Fig. 1), or elsewhere in the optical path between the window 116 and the image sensor 110. In certain embodiments, the shutter 118a, b, c, d (as shown by broken lines in Fig. 1) can be included on one or more of the optical lenses 108, on a window 116a between optics and the sensor 110, and depending on the placement the global aperture function is optimized or reduced in effectiveness. The global timing function is little affected by shutter placement. A shutter controller 124 is operatively connected to the imaging board 114 to control the shutter 118, for example to control the desired light transmissibility. An illuminator controller 126 is operatively connected to the imaging board 114 to control the illuminator 112, for example to control light level and timing.

Several implementations of a shutter 118 are contemplated. The shutter 118 can be a curtain shutter as shown in Fig. 2, a leaf shutter as shown in Fig. 3, or any other suitable type of shutter. For calibration any type of shutter can be used. Calibration enhancements not directly related to NUC basic calibration depend on the specific shutter type and control. The shutter 118 can be fully open or transparent for allowing external light to pass through and viewing the scene or calibrating based on scene light levels. The shutter 118 can go completely closed or opaque with the illuminator 126 powered off, for dark scene (dark noise) calibration. The shutter 118 can be completely closed or opaque with the illuminator 124 powered on, for bright scene calibration. A shutter 118 can also be used to shutter incoming light such that the imaging sensor 110 can be synchronized to external light sources in either enhancing light sources or filtering out illumination noise.

In embodiments, the imaging board 114 can include machine readable instructions. The machine readable instructions can be configured to cause the imaging board 114 to perform any one or all of the following actions: using the shutter 118, blocking illumination 122 outside the enclosure 102 from reaching the interior space 104; using the illuminator 112, illuminating the interior space 104; and/or with the imaging sensor 110, capturing a calibration image using illumination from the illuminator 112.

Blocking light from passing through focusing optics 108 removes external pixel level illumination sources and enables NUC calibration. Illuminating the interior space 104 with the internal SWIR illuminator 112 enables such calibration to generate a non-focused illumination within the optics 108 and ensure the full range of photodetector operation is exercised and NUC calibrated. The light blocking function with an internal light source 112 therefore provides an ability to NUC calibrate the full range of light levels without waiting for ambient external light sources to occur. This enables NUC corrected images to be generated before the first external scene image acquisition with the image sensor.

For example, the machine readable instructions can be configured to further cause the imaging board 114 to use the calibration image to calibrate the imaging sensor 110 for capturing images with non-uniformity correction. In certain embodiments, the machine readable instructions are configured to further cause the imaging board 114 to compensate for an illumination gradient on the imaging sensor 110 from non-uniform illumination from the illuminator on the imaging sensor. In certain embodiments, the machine readable instructions are configured to further cause the imaging board 114 to run calibration at multiple illumination levels of the illuminator 112 and form a respective calibration image at each illumination level for non-uniformity calibration. As such, the calibration is not a single point correction at low light level, but instead can be run along the gradient at chosen intervals from the lowest intensity and saturation to the highest intensity and saturation. In certain embodiments, the machine readable instructions are configured to further cause the imaging board 114 to form non-uniformity corrected images after calibration is complete.

While NUC calibration as described herein does not need uniform illumination across the array, it expects a sufficiently smooth (non-speckled) illumination. Therefore, in certain embodiments, a De-Speckle module 128 can be used to perform a de-speckle algorithm to measure the individual pixel variation within the smooth illumination areas. Speckle variation occurring in the image data for scenes with smooth illumination up to the uniform illumination of a calibration sphere is assumed to be a result of sensor non-uniformity. The values of the speckle variation are captured and measured. The measured pixel variation provides the data to compute the NUC value for the individual pixel. Smoothed area illumination can then be readily captured when light is not focused through a lens.

A method, for NUC calibration includes, blocking, with the shutter 118, illumination 122 outside the enclosure 102, illuminating, with the illuminator 112, the interior space 104, and, capturing, with the imaging sensor 110, a calibration image using illumination from the illuminator 112. In embodiments, the calibration image can be used to calibrate the imaging sensor 110 for capturing images with non-uniformity correction.

In certain embodiments, the method further includes, compensating for an illumination gradient on the imaging sensor 110 from non-uniform illumination from the illuminator 112 on the imaging sensor 110. In certain embodiments, the method further includes running calibration at multiple illumination levels of the illuminator and forming a respective calibration image at each illumination level for non-uniformity calibration. In certain embodiments, the method further includes, forming non-uniformity corrected images after calibration is complete.

The light blocking function with an internal light source provides an ability to NUC calibrate the full range of light levels without waiting for ambient external light sources to occur. This enables NUC corrected images to be generated before the first external scene image acquisition. In certain applications a scene may not be visible at power on, the system 100 as provided herein thus allows a NUC calibration to be run or verified before the scene is viewable.

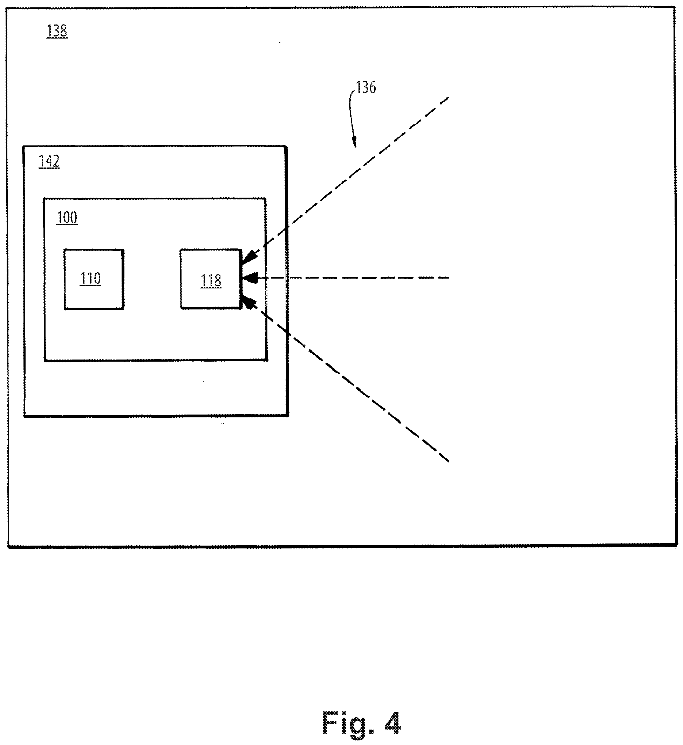

Additionally, as shown in Fig. 4, this allows the system 100 to be used and the method to be performed in the field 138 outside of a calibration lab, even after an external environment condition such as physical shock, temperature shock, vibration, high intensity light source 136 or other extreme condition on the imaging sensor 100 compromises its initial calibration. For example, the system can be included on a moving a physical resource 142 (e.g. guided munition or imaging platform such as a drone or satellite), wherein the method can include guiding the movement of the resource 142 (e.g. a guided munition, a flight body, an airframe, or the like) using images taken after field calibration of the imaging sensor 110. Additional calibration can be performed after any number of high intensity light source stimuli 136, or extreme environmental exposures without requiring that the resource be grounded.

The shutter 118 removes the need to calibrate a NUC values across temperatures ranges prior to encountering a new temperature environment because the shutter 118 is used in-situ. The shutter 118 is used to collect real time calibration data as needed. Moreover, the systems and methods disclosed herein can be useful even if the sensor does not have gain and exposure control.

The methods and systems of the present disclosure, as described above and shown in the drawings, provide for real-time embedded non-uniformity correction (NUC) calibration and enhancing scene capture capabilities. While the apparatus and methods of the subject disclosure have been shown and described, those skilled in the art will readily appreciate that changes and/or modifications may be made thereto without departing from the scope of the subject disclosure.

## Claims

1. An imaging system comprising:
an enclosure with an objective aperture opening into an interior space of the enclosure;
an optical assembly optically coupling the objective aperture to an imaging sensor within the enclosure;
a shutter mounted to the objective aperture for selectively blocking and admitting illumination through the objective aperture into the interior space; and
an illuminator mounted to illuminate the interior space of the enclosure.

2. The imaging system as recited in claim 1, further comprising a window disposed in the objective aperture bounding the interior space together within the enclosure;
wherein the shutter is assembled in an optical path between the window and the image sensor.

3. The imaging system as recited in claim 1 or 2, further comprising an imaging board; wherein the imaging sensor is operatively connected to the imaging board.

4. The imaging system as recited in claim 3, further comprising a shutter controller operatively connected to the imaging board to control the shutter; and/or
further comprising an illuminator controller operatively connected to the imaging board to control the illuminator.

5. The imaging system as recited in claim 1 or 2, further comprising
an imaging board, wherein the imaging sensor is operatively connected to the imaging board;
a shutter controller operatively connected to the imaging board to control the shutter; and
an illuminator controller operatively connected to the imaging board to control the illuminator, wherein the imaging board includes machine readable instructions configured to cause the imaging board perform a method, the method comprising:
blocking, with the shutter, illumination outside the enclosure from reaching the interior space;
illuminating, with the illuminator, the interior space; and
capturing, with the imaging sensor, a calibration image using illumination from the illuminator.

6. The imaging system as recited in claim 5, wherein the machine readable instructions are configured to further cause the imaging board to use the calibration image to calibrate the imaging sensor for capturing images with non-uniformity correction.

7. The imaging system as recited in claim 6, wherein the machine readable instructions are configured to further cause the imaging board to compensate for an illumination gradient on the imaging sensor from non-uniform illumination from the illuminator on the imaging sensor.

8. The imaging system as recited in claim 6 or 7, wherein the machine readable instructions are configured to further cause the imaging board to run calibration at multiple illumination levels of the illuminator and form a respective calibration image at each illumination level for non-uniformity calibration.

9. The imaging system as recited in claim 8, wherein the machine readable instructions are configured to further cause the imaging board to form non-uniformity corrected images after calibration is complete.

10. The imaging system as recited in any preceding claim, wherein the imaging sensor is sensitive to SWIR wavelengths.

11. The imaging system as recited in any preceding claim, wherein the shutter comprises a curtain shutter; and/or
a leaf shutter.

12. A method comprising:
blocking, with a shutter mounted to an objective aperture, illumination outside an enclosure of the objective aperture from reaching an interior space of the enclosure;
illuminating, with an illuminator, the interior space; and
capturing, with an imaging sensor optically coupled to the objective aperture, a calibration image using illumination from the illuminator.

13. The method as recited in claim 12, further comprising using the calibration image to calibrate the imaging sensor for capturing images with non-uniformity correction; optionally further comprising compensating for an illumination gradient on the imaging sensor from non-uniform illumination from the illuminator on the imaging sensor.

14. The method as recited in claim 13, further comprising running calibration at multiple illumination levels of the illuminator and forming a respective calibration image at each illumination level for non-uniformity calibration; optionally
further comprising forming non-uniformity corrected images after calibration is complete.

15. The method as recited in claim 13 or 14, wherein the method is performed outside of a calibration lab, after an undesired external stimulus to the imaging sensor compromises an initial calibration that was performed prior to the shock to the imaging sensor.
